# EUROPÄISCHE PATENTSCHRIFT

(11) **EP 0 876 121 B1**
(45) Veröffentlichungstag und Bekanntmachung des Hinweises auf die Patenterteilung: **10.02.1999**
(21) Anmeldenummer: 97922912.7
(22) Anmeldetag: 25.04.1997
(51) Int. Cl.: A47J 31/02

(54) **FILTERVORRICHTUNG**
FILTERING DEVICE
SYSTEME DE FILTRATION

(30) Priorität: 26.04.1996 DE 19616631; 01.01.1997 DE 19700005
(43) Veröffentlichungstag der Anmeldung: 11.11.1998
(73) Patentinhaber: Bauer, Jürgen, 42103 Wuppertal (DE); Mekelburg, Roswitha, 42389 Wuppertal (DE)
(72) Erfinder: Bauer, Jürgen, 42103 Wuppertal (DE); Mekelburg, Roswitha, 42389 Wuppertal (DE)
(74) Vertreter: Rehders, Jochen, Dipl.-Ing.
(86) Internationale Anmeldenummer: EP9702139
(87) Internationale Veröffentlichungsnummer: WO9740727

(56) Entgegenhaltungen:
- EP-A- 0 020 093
- EP-A- 0 290 801
- EP-A- 0 401 951
- EP-A- 0 460 383
- EP-A- 0 741 988
- DE-A- 2 657 498
- GB-A- 2 120 951

## Beschreibung

Die vorliegende Erfindung betrifft eine Filtervorrichtung zum Aufbrühen eines Getränks nach Oberbegriff von Anspruch l.

Eine derartige Filtervorrichtung ist in der EP 0 460 383 A1 beschrieben. Im einzelnen weist diese bekannte Filtervorrichtung einen allseits geschlossenen Filtereinsatz auf, in dem das Mahlgut, z. B. Kaffeepulver, abgeschlossen enthalten ist. An seiner Oberkante weist der Filtereinsatz eine Perforation auf, um den Filtereinsatz vor dem Aufbrühen des Kaffeepulvers durch Abreißen dieses Bereichs zu öffnen. Der Filtereinsatz weist Faltungen auf und ist in einen rahmenartigen Träger aus dickem Papier mit seinem oberen Rand eingeklebt. Zu beiden Seiten weist der rahmenartige Träger nach außen vorspringende Armbereiche auf, die mit Faltungen und Handgriffen versehen sind, so daß sich die Arme wie ein Y verformen lassen, wodurch der Filtereinsatz auseinander gespreizt wird und sich auf eine Kaffeekanne zum Eingießen von heißem Wasser setzen läßt.

Eine ähnliche auffaltbare Filtervorrichtung ist in der EP 0 401 951 A1 beschrieben, jedoch ist der Filtereinsatz nicht dafür vorgesehen, eine vorportionierte Mahlgutmenge allseitig zu umschließen. Vielmehr wird das Kaffeepulver nach dem Auffalten und Aufsetzen auf ein Trinkgefäß mit Mahlgut gefüllt, um Kaffee aufzubrühen.

In der EP 0 290 801 A2 ist ein Aufsatzfilter zur Herstellung von gefilterten Getränken, insbesondere Kaffee beschrieben, das ein durch Auffalten in eine Stützstellung bringbares Stützorgan zur Abstützung auf einem Rand eines Trinkbehälters aufweist und das einen oben offenen Filterbeutel hält. Wenigstens zwei an gegenüberliegenden Seiten des Filterbeutels angeordnete Stützorgane sind aus einer flach am Filterbeutel anliegenden Ausgangsstellung in eine quer zu diesem gerichtete horizontale Stützstellung schwenkbar und lassen sich in der Stützstellung durch seitliche Klemmflügel fixieren bzw. verriegeln. Der Filterbeutel ist sich nach unten trichterförmig verjüngend ausgebildet, und seine Abmessungen sind so gewählt, daß der überwiegende, untere Bereich des Filterbeutels in der Aufgußstellung in den Behälter hineinragt.

Es ist somit bekannt, Mahlgut aus Kaffee oder Tee in einen Kaffeefilter/Teefilter zu geben, der in einer Filterstützvorrichtung sitzt. Die Filterstützvorrichtung ist in Richtung zum darunter befindlichen Gefäß geöffnet. Das Mahlgut wird dann mit kochendem Wasser aufgebrüht und kann aufquellen. Speziell im Falle der Herstellung von Tee läßt man das aufgebrühte Wasser nicht ablaufen, so daß das Mahlgut ziehen kann.

Diese Maßnahmen dienen dem Zweck, die Aromastoffe im Mahlgut zu lösen, welche dann anschließend ausgeschwemmt werden.

Der Vorteil dieses Verfahrens liegt darin, daß es sowohl bei Kaffee als auch bei Tee anwendbar ist.

Ferner ist es bekannt, Mahlgut aus Tee in einen sogenannten Teebeutel einzubringen. Der Teebeutel wird über den Gefäßrand gehängt. Das Mahlgut kann im kochend aufgegossenen Wasser ziehen. Anschließend wird der Teebeutel herausgenommen und entsorgt.

Ein Problem hierbei sind die Bitterstoffe, die bei zu langem Ziehen zwangsläufig aus dem Tee herausgelöst werden und sich dann im Getränk wiederfinden. Ein weiteres Problem ist, daß dieses Verfahren nur zur Herstellung von Tee geeignet ist.

Es ist daher Aufgabe der vorliegenden Erfindung, die bekannte Filtervorrichtung so weiterzubilden, daß Aufbrühgetränke unter Verringerung von Aufwand auch in kleinen Getränkportionen hergestellt werden können.

Diese Aufgabe wird gelöst mit den Merkmalen von Anspruch l. Weitere Ausbildungen der Erfindung ergeben sich aus den Merkmalen der Unteransprüche.

Aus der Erfindung ergibt sich der Vorteil, daß unabhängig von der benötigten Menge des Getränks die Aromastoffe aus dem Kaffee bzw. aus dem Tee herausgelöst, die Bitterstoffe jedoch zurückgehalten werden.

Die erfindungsgemäße Filtervorrichtung ermöglicht es, die Vorteile des Filterverfahrens auch bei Kleinportionen auszunutzen, ohne die Nachteile des bekannten Verfahrens für kleine Portionen (Teebeutel) in Kauf nehmen zu müssen.

Dieser Vorteil wird dadurch erreicht, daß einerseits die Filtervorrichtung eine vorportionierte Menge des Mahlguts allseitig dicht umschließt, und daß andererseits dieses vorportionierte Mahlgut nach dem an sich bekannten Aufbrühverfahren gefiltert wird. Dadurch werden die Bitterstoffe zurückgehalten, während gleichzeitig die Aromastoffe entzogen werden. Daher liegt in der Kombination des Filterverfahrens mit vorportionierten Mahlgutmengen ein wesentlicher Aspekt.

Infolge der für ein Trinkgefäß nur geringen benötigten Mengen an Mahlgut läßt sich das Filterverfahren mit Stützgestellen durchgeführen, die keine Stützwandung für das Filtermaterial aufweisen. Das Filtermaterial hängt somit frei in der Luft. Dabei hat sich gezeigt, daß bereits handelsübliches Filterpapier ausreichende Festigkeit und Steifigkeit besitzt, um diesen Festigkeitsanforderungen zu genügen. Die bekannten Filtermaterialien lassen sich daher so vorformen/vorprägen, daß sie sich freihängend in das Stützgestell eingehängen lassen. Durch die praktisch freihängende Anordnung des Filtereinsatzes am Stützgestell kann der aufgebrühte Extrakt insbesondere auch seitlich aus dem Filtereinsatz heraustreten und in das darunter angeordnete Trinkgefäß abtropfen. Es ist daher nicht erforderlich, daß der aufgebrühte Extrakt durch die gesamte Mahlgutmenge im Filtereinsatz hindurch läuft. Insbesondere die Randzonen des Mahlguts werden daher unmittelbar nach der Beaufschlagung mit kochendem Wasser extrahiert und der Extrakt dem Trinkgefäß zugeführt.

Ein wesentlicher weiterer Aspekt ist daher, daß der überwiegende Flächenanteil des Filtereinsatzes kontaktfrei mit dem Stützgestell ist, obwohl das Stützgestell allen notwendigen Halt für den Filtereinsatz bietet.

Das Stützgestell kann nur wenige Millimeter breite, ringartige Umfangszonen besitzen, in welche der Filtereinsatz eingehängt oder an die der Filtereinsatz ohne Verwendung von Klebstoff angesiegelt ist. Das Ringgestell kann darüber hinaus auch nach Art eines Korbes aus zumindest zwei Umfangsringen bestehen, die durch aufstrebende Verbindungsstege (z.B. drei bis sechs Stück) miteinander verbunden sind. In allen Fällen wird unter Ausnutzung der Eigenstabilität und Reißfestigkeit des Filtereinsatzmaterials eine hinreichend große Durchtrittsfläche für den Extrakt außerhalb der Kontaktstellen zwischen Filtereinsatz und Stützgestell bereitgestellt.

Insbesondere bei korbartig ausgebildetem Stützgestell lassen sich entsprechend dünnere Materialien für den Filtereinsatz verwenden.

Da der Filtereinsatz an seinem oberen Ende seinen Größtquerschnitt aufweist und von dort zu seinem unteren Ende kontinuierlich zusammenläuft, wird auf diese Weise eine zwangsläufige Unterstützung des Filtereinsatzes gegen Abreißen/Durchrutschen erzielt. Durch die Verwendung zumindest zweier Umfangsringe, nämlich einem oberen und einem unteren, die durch Verbindungsstege miteinander verbunden sind, läßt sich dieser Effekt zusätzlich verstärken.

Für die Erfindung kommen prinzipiell zwei Ausführungsformen in Betracht. Einerseits ist es möglich, den Filtereinsatz unabhängig vom Stützgestell vorzusehen. In diesem Fall wird der Filtereinsatz für jede aufgebrühte Getränkportion separat am Stützgestell angebracht.

Andererseits kann der Filtereinsatz mit dem Stützgestell fest verbunden sein. In diesem Fall wird für jede aufgebrühte Getränkportion eine Filtervorrichtung mitsamt Stützgestell benötigt.

Vorteilhaft wird der Filtereinsatz für ein ringförmiges Stützgestell vorgesehen, welches mehrere nach außen ragende Tragenden aufweist. Die Tragenden sind vorzugsweise gleichmäßig am Umfang verteilt und werden auf den Rand des Trinkgefäßes aufgelegt, bevor das Getränk aufgebrüht wird. Bei der korbartigen Ausbildung des Stützgestells lassen sich die Tragenden am oberen Ringsteg oder an den Verbindungsstegen oder am unteren Ringsteg anordnen.

Durch den Wegfall außen angeordneter Stützwandungen läßt sich die Filtervorrichtung unmittelbar und je nach Anordnung der Tragenden mehr oder weniger tief in das Trinkgefäß einhängen. Da die Höhe der Filtervorrichtung nach dieser Erfindung nur wenige Zentimeter beträgt, stört dies den Aufbrühvorgang nicht. Zuverlässig wird das aufgebrühte Getränk nur in das Trinkgefäß hineinlaufen.

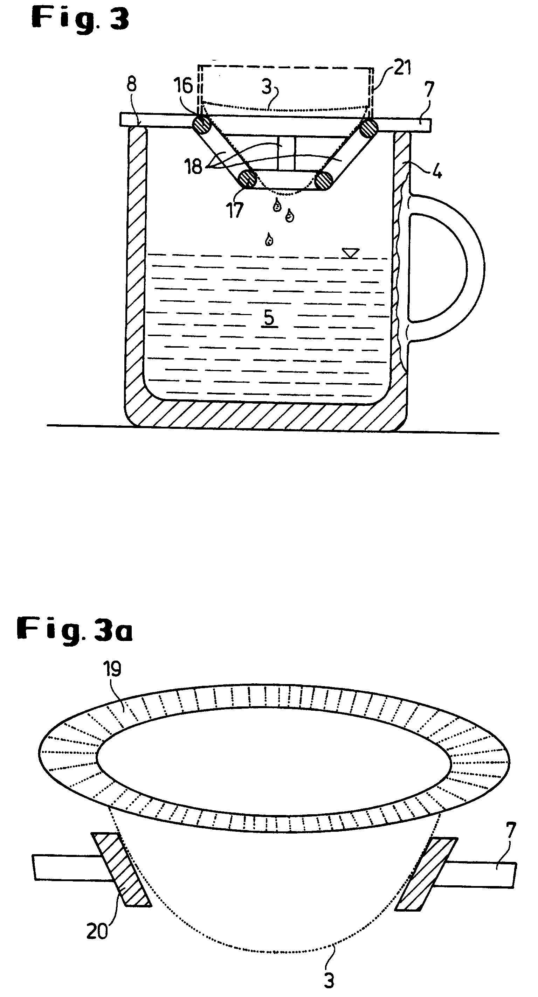

Um eine größere Menge Wasser aufgießen zu können, kann am Gestellring oder am oberen Ringsteg ein zylindrischer oder kegeliger, flüssigkeitsdichter Aufsatz angeordnet sein, der mit dem Stützgestell einstückig aus Kunststoffmaterial gespritzt sein kann. Diese Möglichkeit ist in Fig. 3 gestrichelt angedeutet.

Durch die Verwendung von Filterpapier herkömmlicher Art wird ein hinreichend feinporiges Filtermaterial bereitgestellt. Wird der Aufnahmesack aus Filtermaterial durch ein gröberporiges Abdeckmaterial abgedeckt, kann das Wasser beim Aufbrühen auch schnell genug in den Aufnahmesack des Mahlguts hineinlaufen, ohne daß die Gefahr besteht, daß aufgeschüttetes Wasser seitlich über den Gefäßrand herablaufen kann.

Zusätzlich wird vorgeschlagen, das gröberporige Abdeckmaterial der Filtervorrichtung etwas nach unten durchhängen zu lassen, um auch hier dem Anstaueffekt des Brühwassers entgegen zu wirken.

Vorteilhaftes Material für das Filtermaterial ist Filterpapier, vorteilhaftes Material für die Abdeckung der Filtervorrichtung ist grobporiger Vliesstoff, deren Ränder sich durch Prägen oder Rändeln ohne Verwendung von Klebstoff fest miteinander verbinden lassen.

Zur einfachen Herstellung der Filtervorrichtung wird vorgeschlagen, Filtermaterial mit kreisförmigen Grundriß zu nehmen und dieses entlang zumindest zweier Diametralen gegensinnig zu falten. Die Diametralen schließen zwischen sich einen Winkel von etwa bis zu 30° ein. Jeweils Paare derartig gegensinnig gefalteter Diametralen können vorgesehen sein, um zu durchmesserkleinen, nahtlosen Filtervorrichtungen zu kommen. Die Faltungen lassen sich gegen ein Auseinanderfalten durch die Verbindung der Ränder des Aufnahmesacks und des Abdeckmaterials sichern. Zusätzlich können die Faltungen zur Kegelspitze hin bereichsweise oder auf der ganzen Länge durch Prägen oder Rändeln gegen Auseinanderfalten gesichert sein.

Wenn der Zuschnitt des Filtermaterials einen im wesentlichen ovalen Grundriß aufweist und die entlang der großen Achse angeordneten Diametralen mit Abstand zueinander enden, läßt sich ein Filtereinsatz mit im wesentlichen kegelstumpfförmiger Gestalt herstellen.

Die zunehmenden Anforderungen nach entsorgungsfähigen Wegwerfprodukten führen zu einer Weiterbildung, bei der das Stützgestell aus einem wasserbeständigen jedoch recyclefähigem Material besteht. Hierfür kommen insbesondere Draht, Kunststoff, heißwasserfester Karton in Betracht.

Im folgenden wird die Erfindung anhand von Ausführungsbeispielen näher erläutert. Es zeigen:
- Fig.1: ein erstes Ausführungsbeispiel der Erfindung in seitlicher Schnittansicht,
- Fig.2: ein Ausführungsbeispiel gemäß Fig.1 in Ansicht von oben,
- Fig.3: ein weiteres Ausführungsbeispiel der Erfindung,
- Fig.3a: ein weiteres Ausführungsbeispiel der Erfindung,
- Fig.4a, b: jeweils einen Zuschnitt zur Herstellung der Filtervorrichtung nach den Fig.1 bis 3 und
- Fig. 5: eine weitere Ausführungsform eines Zuschnitts.

Sofern im folgenden nichts anderes gesagt ist, gilt die folgende Beschreibung stets für alle Figuren.

Die Figuren zeigen eine Filtervorrichtung 1 zum Aufbrühen eines Getränks aus dem Mahlgut von Kaffee oder Tee.

Zu diesem Zweck ist ein Stützgestell 2 vorgesehen, das auf ein Gefäß aufgesetzt wird. Das Stützgestell 2 trägt einen Filtereinsatz 3. Der Filtereinsatz 3 umschließt eine vorportionierte Menge des Mahlguts. Die Menge ist vorportioniert für den Bedarf üblicher Trinkgefäße 4. Das Mahlgut wird allseitig umschlossen. Zu diesem Zweck weist der Filtereinsatz 3 einen nach unten frei durchhängenden Aufnahmesack 10 auf, in dem das Mahlgut liegt. Der Aufnahmesack 10 ist zwar luftdurchlässig und wasserdurchlässig, für das Mahlgut an sich jedoch undurchlässig. Nach oben hin wird der Aufnahmesack 10 von einem geeigneten Abdeckmaterial 11 verschlossen. Das Abdeckmaterial 11 ist, ebenso wie der Aufnahmesack 10 zwar luftdurchlässig und wasserdurchlässig, jedoch für das Mahlgut dicht.

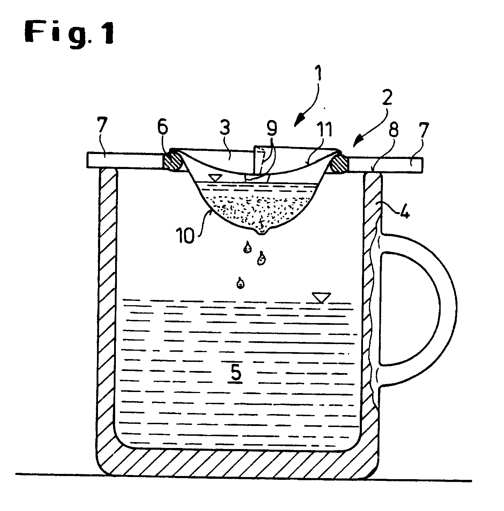

Wesentlich ist, daß der Aufnahmesack 10 an seinem oberen Ende seinen Größtquerschnitt aufweist und von dort zu seinem unteren Ende kontinuierlich zusammenläuft. Der Aufnahmesack 10 ist daher von trichterartiger/kalottenartiger Kontur. Die Seitenwände des Aufnahmesacks 10 verlaufen vom oberen Ende zum unteren Ende geneigt. Auf diese Weise wird auch seitlich ein Durchrinnen der Extraktflüssigkeit ermöglicht. Die durchgeronnene Extraktflüssigkeit wird daher bereits aus den oberen Bereichen des Mahlguts unmittelbar in das Trinkgefäß abgeleitet. Ferner ist wesentlich, daß das Stützgestell 2 innen von einer Einhüllenden umschrieben ist, die umfangsmäßig lediglich ringartig unterhalb des Größtquerschnitts des Filtereinsatzes am Filtereinsatz anliegt. Damit wird praktisch eine Unterstützung des Filtereinsatzes 3 durch das Stützgestell 2 erzwungen. Prinzipiell genügt es, wie in Fig.1 gezeigt, lediglich einen einzigen Gestellring 6 vorzusehen, der unmittelbar unterhalb des Größtquerschnitts des Filtereinsatzes 3 angeordnet sein. Es entsteht somit lediglich eine schmale ringartige Kontaktstelle zwischen Stützgestell 2 und Filtereinsatz 3 mit einem außerordentlich großen Anteil an freier Durchtrittsfläche für den aufgebrühten Extrakt.

Demgegenüber zeigt Fig.3 ein Ausführungsbeispiel, bei dem das Stützgestell einen oberen und einen unteren ringförmigen Steg 16, 17 aufweist, wobei der obere Ringsteg 16 und der untere Ringsteg 17 durch schräg nach oben strebende Verbindungsstege 18 korbartig miteinander verbunden sind. Auf diese Weise wird ebenfalls eine relativ große freie Durchtrittsfläche für den Extrakt erzeugt, während die Kontaktstellen zwischen Filtereinsatz 3 und Stützgestell 2 für eine umfangsmäßige Unterstützung des Filtereinsatzes 3 sorgen. Die Tragenden 7 können auch an den Verbindungsstegen 18 oder am unteren Ringsteg 17 angeordnet sein, so daß der Filtereinsatz 3 nicht so tief in das Trinkgefaß 4 hineinragt.

Fig. 3a zeigt ein weiteres Ausführungsbeispiel der Erfindung. Dort ist lediglich ein einziger ringförmiger Steg 20 vorgesehen, der nach Art eines Trichterstumpfes einen hierzu korrespondierend konturierten Filtereinsatz 3 aufnimmt. Der Filtereinsatz 3 ist auf seinem oberen Rand mit dem Abdeckmaterial 11 über eine Falzverbindung 19 verbunden. Hierdurch wird eine gewisse Festigkeit gegen Zusammenschnüren des oberen Endes erzielt, so daß der in den Trichterstumpf eingehängte Filtereinsatz 3 zuverlässig für den Aufbrühvorgang gehalten wird. Bei dieser Ausführungsform sind die Tragenden 7 etwa auf halber Höhe am Trichterstumpf 20 angeordnet.

Zur Verwendung der gezeigten Filtervorrichtung wird das Stützgestell 2 für jede aufgebrühte Getränkeportion auf einen Becher/eine Tasse aufgelegt. Der Becher/die Tasse wird als Trinkgefäß 4 bezeichnet. Das Stützgestell 2 wird auf den Rand 8 des Trinkgefäßes 4 aufgelegt und anschließend kann das im Aufnahmesack 10 befindliche Mahlgut aufgebrüht werden.

Wesentlich ist, daß das Stützgestell 2 ringsum und von oben nach unten durchgehend ohne Stützwandung ausgebildet ist, und daß jeder Filtereinsatz 3 nach unten frei in seinem Stützgestell 2 hängt.

Das Ausführungsbeispiel gemäß Fig. 1 zeigt, daß der Filtereinsatz 3 z. B. durch Heißsiegeln ohne Verwendung von Klebstoff fest mit seinem jeweiligen Stützgestell 2 verbunden ist. Damit wird für jede aufgebrühte Getränkportion eine Filtervorrichtung 1 benötigt. Genauso ist es denkbar, die Filtervorrichtung l aus einem separaten Filtereinsatz 3 und einem separaten Stützgestell 2 zu bilden. In diesem Fall würde jeweils ein Filtereinsatz 3 für jede aufgebrühte Getränkportion in das Stützgestell 2 einzuhängen sein (z.B. Fig.3).

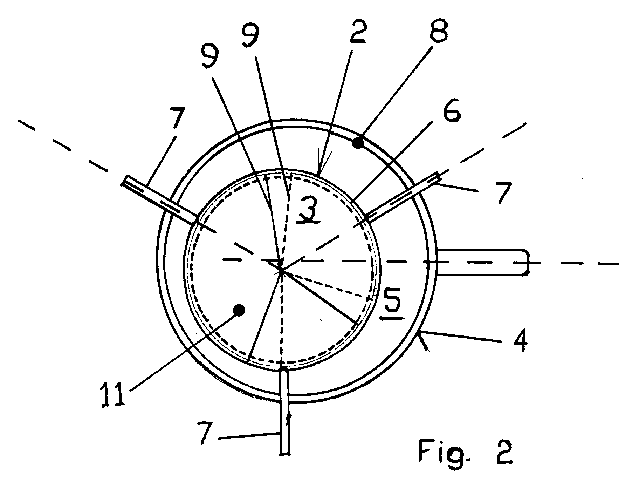

Im Falle der Fig. 1 ist der Filtereinsatz 3 für ein ringförmiges Stützgestell 2 vorgesehen. Das ringförmige Stützgestell 2 weist, wie Fig. 2 zeigt, drei nach außen ragende radiale Tragenden 7 auf, die über den Rand 8 des Trinkgefäßes gehängt werden, so daß der Filtereinsatz 3 frei in das Trinkgefäß 4 hineinhängt und zum Flüssigkeitsspiegel des Getränks einen Abstand bildet.

Dadurch, daß der Filtereinsatz 3 in den Becher/die Tasse hineinhängt, wird das gefilterte Getränk ausschließlich auch in das Trinkgefäß 4 hineinlaufen. Dabei ist der Durchmesser der Filtervorrichtung 1 deutlich kleiner als der Durchmesser üblicher Trinkgefäße 4, so daß beim Aufbrühen des Getränks seitlich überlaufendes Wasser auch in das Trinkgefäß 4 hineinlaufen wird.

Wie die Fig. 1 und 3 zeigen, weist die Filtervorrichtung 1 einen durchhängenden Aufnahmesack 10 auf, der aus feinporigem Filtermaterial besteht. Hierzu kann übliches Filterpapier verwendet werden. Der Aufnahmesack 10 ist nach oben von einem gröberporigen Abdeckmaterial 11 abgedeckt und fest verschlossen. Im dazwischen entstehenden Raum ist das Mahlgut aus Kaffee oder Tee eingebracht.

Wie insbesondere Fig. 1 zeigt, kann das obere Abdeckmaterial 11 so großzügig bemessen sein, daß dieses nach unten durchhängt. Beim Aufschütten des Wassers wird daher oberhalb des Abdeckmaterials 11 ein Sammelraum entstehen, bevor das Wasser seitlich über den Gestellring 6 tritt.

Während das Filtermaterial aus üblichem Filterpapier bestehen kann, wird zusätzlich vorgeschlagen, das Abdeckmaterial 11 aus einem Vliesstoff zu fertigen. Hierfür hat sich ein Vliesstoff bewährt, der grobporig und langfaserig ist, etwa vergleichbar mit dem Vliesstoff, aus dem übliche Teebeutel gefertigt sind. Die Ränder des Aufnahmesacks 10 aus Filterpapier und des Abdeckmaterials 11 aus Vliesstoff können durch Prägen oder Rändeln ohne Verwendung von Klebstoff dicht miteinander verbunden sein.

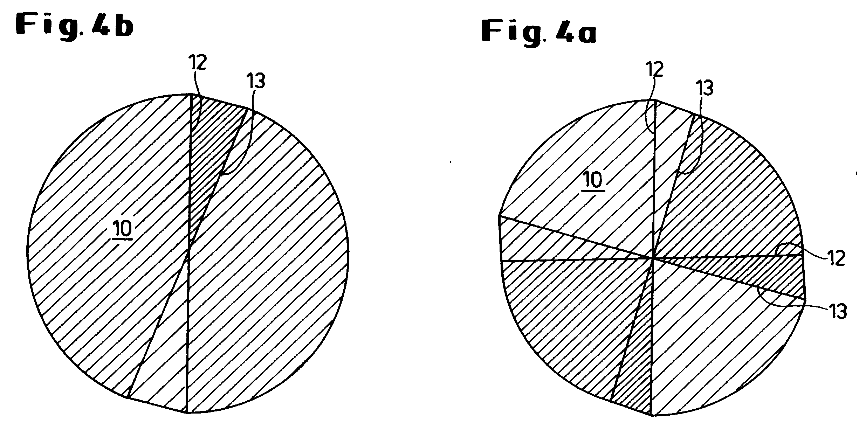

Weiterhin zeigen Fig. 4a, 4b, wie ein Filtereinsatz 3 leicht herstellbar wird. Zu diesem Zweck wird vorgeschlagen, das Filtermaterial mit einem kreisförmigen Grundriß zunächst entlang zumindest zweier Diametralen 12, 13 gegensinnig zu falten. Ein weiteres Diametralenpaar kann gemäß der Fig.4a vorgesehen sein. Die Diametralenpaare stehen jeweils unter einem Winkel bis zu etwa 30° aufeinander. Jede Diametrale bildet eine Faltlinie 9. Durch Faltung des Filtermaterials entlang der vorgegebenen Faltlinien 9 in jeweils entgegengesetzte Richtung wird aus dem Filtermaterial mit kreisförmigem Grundriß ein nahtloses, kegelförmiges Hohlgebilde, das sich gemäß Fig. 1 und 3 leicht an einem zugeordneten Gestellring 6 befestigen läßt, bevor das Mahlgut aus Kaffee oder Tee dann eingebracht wird. Anschließend kann das Abdeckmaterial 12 aufgebracht werden.

Die Faltungen lassen sich gegen ein Auseinanderfalten durch die Verbindung der Ränder des Aufnahmesacks 10 und des Abdeckmaterials 11 sichern. Zusätzlich können die Faltungen zur Kegelspitze hin bereichsweise oder auf der ganzen Länge durch Prägen oder Rändeln gegen Auseinanderfalten gesichert sein, so daß sich der Filtereinsatz 3 beim Aufbrühen des Mahlguts durch das Gewicht des Wassers nicht aufwölbt und verformt. Aufgrund der nahtlosen Gestaltung des Filtermaterials für den Filtereinsatz 3 ist trotz des freien Durchhängens im Stützgestell 2 eine vollständige Sicherheit gegen ein Austreten des Mahlguts, selbst wenn sich die Faltungen öffnen sollten, gegeben.

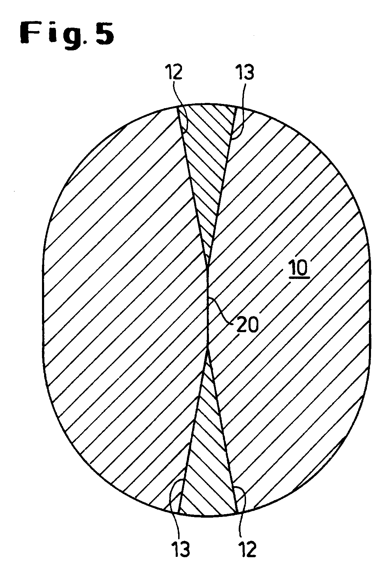

Wenn der Zuschnitt des Filtermaterials, wie in Fig. 5 dargestellt, einen im wesentlichen ovalen Grundriß aufweist und die entlang der großen Achse angeordneten Diametralen 12, 13 mit Abstand 22 zueinander enden, läßt sich ein Filtereinsatz mit im wesentlichen kegelstumpfförmiger Gestalt herstellen.

Die Größe des Filtereinsatzes 3 bemißt sich einerseits nach dem Bedarf der Mahlgutmenge, wie diese für Trinkgefäße üblicher Größe erforderlich ist. Andererseits muß auch das Aufquellen des Mahlguts beim Aufbrühen berücksichtigt werden. Dabei darf die Senke, welche das Abdeckmaterial 11 ggf. bildet, möglichst nicht so groß sein, daß aufgequollenes Mahlgut nach oben durch das Abdeckmaterial 11 hindurchtritt.

Auf jeden Fall soll zwischen der Obergrenze des aufgequollenen Mahlguts und dem Abdeckmaterial 11 noch ein ausreichend breiter Abstand verbleiben, um auch hier das Übertreten von aufgequollenem Mahlgut durch das Abdeckmaterial 11 zu vermeiden.

Um eine größere Menge Wasser aufgießen zu können, kann am Gestellring 6 oder am oberen Ringsteg 16 ein zylindrischer oder kegeliger, flüssigkeitsdichter Aufsatz 21 angeordnet sein, der mit dem Stützgestell 2 einstückig aus Kunststoffmaterial gespritzt sein kann. Diese Möglichkeit ist in Fig. 3 gestrichelt angedeutet.

## Patentansprüche

1. Filtervorrichtung (1) zum Aufbrühen eines Getränks (5) aus Mahlgut von Kaffee/Tee, die mittels Stützgestell (2) auf ein Gefäß aufgesetzt wird, und die einen Filtereinsatz (3) umfaßt, der eine für Trinkgefäße (4) vorportionierte Mahlgutmenge allseitig umschließt, wobei für jede aufgebrühte Getränkportion ein separater Filtereinsatz (3) für ein Stützgestell (2) vorgesehen ist, welches auf dem Rand (8) eines Bechers/einer Tasse (= Trinkgefäß 4) aufgelegt wird, **dadurch gekennzeichnet**, daß der Durchmesser der Filtervorrichtung (1) deutlich kleiner als der Durchmesser üblicher Trinkgefäße (4) ist, ein etwa kegelförmiger Filtereinsatz (3) einen nahtlosen feinporigen Aufnahmesack (10) aufweist, der mit einer gröberporigenen Abdeckung (11), die nach unten durchhängt, versehen ist, der Aufnahmesack (10) einen kreisförmigen oder ovalen Grundriß aufweist, der entlang zumindest zweier Diametralen (12, 13), die jeweils unter einem Winkel bis zu etwa 45° aufeinanderstehen, gegensinnig gefaltet ist, wobei jede Diametrale eine Faltlinie (9) bildet und durch die Faltung des Filtermaterials entlang der vorgebenen Faltlinien (9) in jeweils entgegengesetzter Richtung aus dem Filtermaterial der trichterartige Aufnahmesack (10) wird, die Faltungen gegen ein Auseinanderfalten ohne Verwendung von Klebstoff durch die Verbindung wenigstens der Ränder des Aufnahmesackes (10) und das Abdeckmaterials (11) gesichert sind, die gröberporige Abdeckung (11) so großzügig bemessen ist, daß sie eine Senke bildet und der kegelförmige Filtereinsatz (3) freihängend und überwiegend kontaktfrei unterhalb des Größtquerschnitts von dem ringförmigen Stützgestell (2) umfangsmäßig lediglich ringartig tragend unterstützt wird, der Filtereinsatz (3) außerhalb der Kontaktstellen mit dem Stützgestell (2) freien Durchtritt für den aufgebrühten Extrakt bietet und das Stützgestell (2) zumindest zwei radial nach außen ragende Tragenden (7) aufweist.

2. Filtervorrichtung nach Anspruch l, **dadurch gekennzeichnet**, daß das Stützgestell (2) ringförmige Stege (16, 17) aufweist, die mit dem Filtereinsatz (3) lediglich in schmalen Umfangsbereichen Kontakt haben.

3. Filtervorrichtung nach Anspruch 2, **dadurch gekennzeichnet**, daß zumindest ein oberer Ringsteg (16) und ein unterer Ringsteg (17) vorgesehen sind und daß beide Ringstege (16, 17) durch Verbindungsstege (18) korbartig miteinander verbunden sind.

4. Filtervorrichtung nach Anspruch 1, **dadurch gekennzeichnet**, daß das Stützgestell (2) lediglich einen oberen Umfangsring aufweist und ansonsten ohne Stützwandung ausgebildet ist, und daß der Filtereinsatz (3) nach unten frei im Stützgestell (2) hängt.

5. Filtervorrichtung nach Anspruch l, **dadurch gekennzeichnet**, daß der Filtereinsatz (3) bezüglich des Stützgestells (2) für jede aufgebrühte Getränkportion auswechselbar ist.

6. Filtervorrichtung nach Anspruch l, **dadurch gekennzeichnet**, daß der Filtereinsatz (3), vorzugsweise durch Heißsiegeln ohne Verwendung von Klebstoff, fest mit dem Stützgestell (2) verbunden ist.

7. Filtervorrichtung nach einem der Ansprüche 1 bis 6, **dadurch gekennzeichnet**, daß der Filtereinsatz (3) für ein ringförmiges Stützgestell (6) vorgesehen ist, welches zumindest zwei, vorzugsweise drei radial nach außen ragende Tragenden (7) aufweist.

8. Filtervorrichtung nach Anspruch 3 und 7, **dadurch gekennzeichnet**, daß die Tragenden (7) am oberen Ringsteg (16) oder den Verbindungsstegen (18) oder am unteren Ringsteg (17) angeordnet sind.

9. Filtervorrichtung nach einem der Ansprüche 1 bis 8, **dadurch gekennzeichnet**, daß am Gestellring (6) bzw. am oberen Ringsteg (16) ein zylindrischer oder kegeliger, flüssigkeitsdichter Aufsatz angeordnet ist.

10. Filtervorrichtung nach einem der Ansprüche 1 bis 9, **dadurch gekennzeichnet**, daß das Stützgestell (2) auf den Rand (8) des Trinkgefäßes (4) aufgelegt wird, und daß der Filtereinsatz (3) in das Trinkgefäß (4) hineinhängt.

11. Filtervorrichtung nach Anspruch 10, **dadurch** gekennzeichnet, daß der Filtereinsatz (3) einen durchhängenden Aufnahmesack (10) aus feinporigem Filtermaterial aufweist, der nach oben durch gröberporiges Abdeckmaterial (11) abgedeckt ist.

12. Filtervorrichtung nach Anspruch 11, **dadurch gekennzeichnet**, daß das Filtermaterial Filterpapier ist.

13. Filtervorrichtung nach Anspruch 11, **dadurch gekennzeichnet**, daß das Abdeckmaterial aus langfasrigem und grobporigem Vliesstoff gebildet wird.

14. Filtervorrichtung nach einem der Ansprüche 11 bis 13, **dadurch gekennzeichnet**, daß die Ränder des Aufnahmesacks (10) und des Abdeckmaterials (11) durch Prägen oder Rändeln ohne Verwendung von Klebstoff fest miteinander verbunden sind.

15. Filtervorrichtung nach einem der Ansprüche 11 bis 14, **dadurch gekennzeichnet**, daß das Filtermaterial einen im wesentlichen kreisförmigen Grundriß aufweist, der entlang zumindest zweier Diametralen (12, 13) gegensinnig gefaltet ist, und daß die so erzeugten Faltlinien (9) einen Winkel von praktisch bis zu 45°, vorzugsweise weniger als 30° aufspannen.

16. Filtervorrichtung nach Anspruch 15, **dadurch gekennzeichnet**, daß die Faltungen wenigstens im Bereich des Randes oder auf der ganzen Länge bis zur Kegelspitze hin durch Prägen oder Rändeln ohne Verwendung von Klebstoff gegen Auseinanderfalten gesichert sind.

17. Filtervorrichtung nach Anspruch 15, **dadurch gekennzeichnet**, daß das Filtermaterial einen im wesentlichen ovalen Grundriß aufweist, wobei die entlang der großen Achse angeordneten diametralen Faltungen mit Abstand zueinander enden und der Filtereinsatz eine im wesentlichen kegelstumpfförmige Gestalt erhält.

18. Filtervorrichtung nach einem der Ansprüche l bis 17, **dadurch gekennzeichnet**, daß das Stützgestell (2) aus einem wasserbeständigen jedoch recyclefähigen Material besteht.

19. Filtervorrichtung nach einem der Ansprüche 1 bis 18, **dadurch gekennzeichnet**, daß das Stützgestell aus Kunststoffmaterial gespritzt ist.

## Claims

1. Filter device (1) for brewing of a beverage (5) made from ground coffee/tea, which is placed on a vessel by means of a supporting frame (2) and which comprises a filter insert (3) which surrounds on all sides a quantity of grounds pre-portioned for drinking vessels (4), a separate filter insert (3) for a supporting frame (2) being provided for each portion of beverage brewed, the supporting frame (2) being placed upon the edge (8) of a mug/cup (= drinking vessel 4), characterized in that the diameter of the filter device (1) is clearly smaller than the diameter of conventional drinking vessels (4), in that a roughly cone-shaped filter insert (3) has a seamless fine-pore reception bag (10) equipped with a covering (11) of coarser pore which hangs downwards, in that the reception bag (10) has a circular or oval profile which is folded in opposite directions along at least two diametrals (12, 13) which are positioned at an angle of up to approximately 45° to one another, each diametral forming a fold line (9) and by the folding of the filter material in opposite directions along the prescribed fold-lines the hopper-like reception bag (10) is formed from the filter material, in that the folds are secured against unfolding, without the use of adhesives, by the connection between at least the edges of the reception bag (10) and the covering material (11), in that the coarser-pored covering (11) is of such generous dimensions that it forms a depression and the cone-shaped filter insert (3) is supported, hanging freely and almost complete contact-free below the largest cross section of the ring-shaped supporting frame (2), being simply carried circumferentially, in that the filter insert (3) allows free passage for the brewed extract other than at the points of contact with the supporting frame (2) and in that the supporting frame (2) has at least two bearing ends (7) projecting radially outwards.

2. Filter device as claimed in Claim 1, characterized in that the supporting frame (2) has ring-shaped struts (16, 17) which come into contact with the filter insert (3) only in narrow peripheral areas.

3. Filter device as claimed in Claim 2, characterized in that at least an upper ring-strut (16) and a lower ring-strut (17) are provided and in that both ring-struts (16, 17) are connected to one other in the manner of a basket by connection struts (18).

4. Filter device as claimed in Claim 1, characterized in that the supporting frame (2) has only an upper peripheral ring and is otherwise designed without supporting walling, and in that the filter insert (3) hangs freely downwards in the supporting frame (2).

5. Filter device as claimed in Claim 1, characterized in that the filter insert (3) is replaceable, relative to the supporting frame (2), for each portion of beverage brewed.

6. Filter device as claimed in Claim 1, characterized in that the filter insert (3) is fixed, preferably by heat-sealing, without the use of adhesive, to the supporting frame (2).

7. Filter device as claimed in one of Claims 1 to 6, characterized in that the filter insert (3) is provided for a circular supporting frame (2) which has at least two, preferably three, bearing ends (7) projecting radially outwards.

8. Filter device as claimed in Claims 3 and 7, characterized in that the bearing ends (7) are located on the upper ring-strut (16) or on the connection struts (18) or on the lower ring-strut (17).

9. Filter device as claimed in one of Claims 1 to 8, characterized in that on the frame ring (6) - or on the upper ring strut (16) - a cylindrical or conical, impermeable extension is located.

10. Filter device as claimed in one of Claims 1 to 9, characterized in that the supporting frame (2) is placed upon the edge (8) of the drinking vessel (4) and in that the filter insert (3) hangs into the drinking vessel (4).

11. Filter device as claimed in Claim 10, characterized in that the filter insert (3) has a sagging reception bag (10), made of fine-pore material, which is covered above by coarser-pored covering material (11).

12. Filter device as claimed in Claim 11, characterized in that the filter material is filter paper.

13. Filter device as claimed in Claim 11, characterized in that the covering material is formed of long-fibre, coarse-pored fleece.

14. Filter device as claimed in one of Claims 11 to 13, characterized in that the edges of the reception bag (10) and of the covering material (11) are secured to one another by embossing or knurling, without the use of adhesive.

15. Filter device as claimed in one of Claims 11 to 14, characterized in that the filter material has an essentially circular profile, which is folded in opposite directions along at least two diametrals (12, 13) and in that the fold lines (9) thus produced span an angle of practically up to 45°, preferably less than 30°.

16. Filter device as claimed in Claim 15, characterized in that the folds, at least in the area of the edge or along the whole length to the tip of the cone, are secured against unfolding by embossing or knurling without the use of adhesive.

17. Filter device as claimed in Claim 15, characterized in that the filter material has an essentially oval profile, the diametral folds located along the large axis ending at a certain distance from one another giving the filter insert (3) an essentially sawn-off cone shape.

18. Filter device as claimed in one of Claims 1 to 17, characterized in that the supporting frame (2) consists of a water-resistant but recyclable material.

19. Filter device as claimed in one of Claims 1 to 18, characterized in that the supporting frame (2) is moulded from plastic.

## Revendications

1. Dispositif de filtrage (1) destiné à faire infuser une boisson (5) à partir d'un produit moulu constitué de café/thé, le dispositif étant placé sur un récipient au moyen d'un bâti d'appui (2) et comprenant une garniture de filtrage (3) qui entoure de tous côtés une quantité de produit moulu ayant été pré-portionnée pour des récipients de boisson (4), une garniture de filtre (3) séparée étant prévue pour chaque portion de boisson infusée pour un bâti d'appui (2), qui est posé sur le bord (8) d'un godet/d'une tasse (=récipient à boisson 4), caractérisé en ce que le diamètre du dispositif de filtrage (1) est nettement inférieur au diamètre des récipients à boisson (4) usuels, qu'une garniture de filtre (3) à forme à peu près conique présente un sac de réception (10) à fins pores sans couture, qui est doté d'un recouvrement (11) à porosité plus grossière, pendant vers le bas, le sac de réception (10) présentant un profil à forme circulaire ou ovale qui est plié le long d'au moins deux lignes diamétrales (12, 13), le pliage se faisant en sens inverse, en comprenant chaque fois un angle allant jusqu'à environ 45°, chaque ligne diamétrale constituant une ligne de pliage (9) de sorte que, par le pliage du matériau filtrant le long des lignes de pliage (9) données dans chaque direction opposée, à partir du matériau filtrant le sac de réception (10) du genre d'un entonnoir est constitué, les pliages étant bloqués contre toute ouverture par dépliage sans utiliser de l'adhésif, au moyen de la liaison d'au moins les bords du sac de réception (10) et du matériau de recouvrement (11), le recouvrement à porosité grossière (11) étant dimensionné généreusement, de manière à constituer un creux, et la garniture de filtre (3) à forme conique étant soutenue en périphérie seulement en étant portée à la façon d'un anneau, en pendant librement et largement sans contact au-dessous de la section transversale maximale par le bâti d'appui (2) à forme annulaire, la garniture de filtre (3) offrant, hors des points de contact avec le bâti d'appui (2), un passage libre pour l'extrait infusé, et le bâti d'appui (2) présentant au moins deux extrémités support (7) qui font saillie radialement vers l'extérieur.

2. Dispositif de filtrage selon la revendication 1, caractérisé en ce que le bâti d'appui (2) présente des nervures (16, 17) à forme annulaire qui sont en contact avec la garniture de filtre (2) seulement dans des zones périphériques étroites.

3. Dispositif de filtrage selon la revendication 2, caractérisé en ce qu'au moins une nervure annulaire supérieure (16) et une nervure annulaire inférieure (17) sont prévues, et en ce que les deux nervures annulaires (16, 17) sont reliées ensemble à la façon d'un panier par des nervures de liaison (18).

4. Dispositif de filtrage selon la revendication 1, caractérisé en ce que le bâti d'appui (2) présente seulement un anneau périphérique supérieur et, pour le reste, est constitué sans paroi d'appui, et en ce que la garniture de filtre (3) pend vers le bas librement dans le bâti d'appui (2).

5. Dispositif de filtrage selon la revendication 1, caractérisé en ce que la garniture de filtre (3) est remplaçable par rapport au bâti d'appui (2) pour chaque portion de boisson ayant été infusée.

6. Dispositif de filtrage selon la revendication 1, caractérisé en ce que la garniture de filtre (3) est reliée fermement au bâti d'appui (2), de préférence par scellage à chaud, sans utilisation d'un adhésif.

7. Dispositif de filtrage selon l'une des revendications 1 à 6, caractérisé en ce que la garniture de filtre (3) est prévue pour un bâti d'appui (6) à forme annulaire, qui présente au moins deux, de préférence trois, extrémités support (7) se projetant radialement vers l'extérieur.

8. Dispositif de filtrage selon les revendication 3 et 7, caractérisé en ce que les extrémités support (7) sont disposées sur la nervure annulaire supérieure (16) ou bien les nervures de liaison (18), ou bien sur la nervure annulaire inférieure (17).

9. Dispositif de filtrage selon l'une des revendications 1 à 8, caractérisé en ce que sur l'anneau de bâti (6), respectivement sur la nervure annulaire supérieure (16), est disposé un chapeau cylindrique ou conique, étanche au liquide.

10. Dispositif de filtrage selon l'une des revendications 1 à 9, caractérisé en ce que le bâti d'appui (2) est posé sur le bord (8) du récipient à boisson (4), et en ce que la garniture de filtre (3) pend vers le bas à l'intérieur du récipient à boisson (4).

11. Dispositif de filtrage selon la revendication 10, caractérisé en ce que la garniture de filtre (3) présente un sac de réception (10) pendant vers le bas, constitué d'un matériau filtrant à porosité fine couvert vers le haut par un matériau de recouvrement (11) à porosité plus grossière.

12. Dispositif de filtrage selon la revendication 11, caractérisé en ce que le matériau filtrant est un papier filtre.

13. Dispositif de filtrage selon la revendication 11, caractérisé en ce que le matériau de recouvrement est constitué d'un matériau en matelas de fibres présentant de fibres longues et une grande porosité.

14. Dispositif de filtrage selon l'une des revendications 11 à 13, caractérisé en ce que les bords du sac de réception (10) et du matériau de recouvrement (11) sont reliés ensemble fermement par matriçage ou moletage, sans utilisation d'adhésif.

15. Dispositif de filtrage selon l'une des revendications 11 à 14, caractérisé en ce que le matériau filtrant présente un profil sensiblement circulaire qui est plié en sens inverse le long d'au moins deux lignes diamétrales (12, 13), et en ce que les lignes de pliage (9) ainsi produites font un angle allant pratiquement jusqu'à 45°, de préférence inférieur à 30°.

16. Dispositif de filtrage selon la revendication 15, caractérisé en ce que les pliages, au moins dans la zone du bord ou sur toute la longueur jusqu'à la pointe du cône, sont bloqués contre le dépliage par un matriçage ou un moletage, sans utilisation d'adhésif.

17. Dispositif de filtrage selon la revendication 15, caractérisé en ce que le matériau filtrant présente un profil sensiblement ovale, des pliages diamétraux disposés le long du grand axe s'achevant à distance les uns des autres, et la garniture de filtre recevant une forme sensiblement tronconique.

18. Dispositif de filtrage selon l'une des revendications 1 à 17, caractérisé en ce que le bâti d'appui (2) est réalisé en un matériau résistant à l'eau, tout en étant cependant recyclable.

19. Dispositif de filtrage selon l'une des revendications 1 à 18, caractérisé en ce que le bâti d'appui est obtenu par injection à partir de matière plastique.
